# EUROPEAN PATENT SPECIFICATION

(11) **EP 2 674 941 B1**
(45) Date of publication and mention of the grant of the patent: **06.04.2016**
(21) Application number: 13172161.5
(22) Date of filing: 14.06.2013
(51) Int. Cl.: G10L 15/22, G10L 13/00

(54) **Terminal apparatus and control method thereof**
Endgerätevorrichtung und Steuerverfahren dafür
Appareil terminal et son procédé de commande

(30) Priority: 15.06.2012 KR 20120064384; 22.11.2012 KR 20120133125
(43) Date of publication of application: 18.12.2013
(73) Proprietor: Samsung Electronics Co., Ltd, Gyeonggi-do 443-742 (KR)
(72) Inventor: Lee, Yui-yoon, Busan (KR); Cho, Sung-kil, Gyeonggi-do (KR); Cha, Tae-hwan, Yongin-si, Gyeonggi-do (KR)
(74) Representative: Walaski, Jan Filip

(56) References cited:
- EP-A1- 2 244 252
- EP-A2- 1 081 589
- DE-U1-202007 009 355
- JP-A- 2001 005 487
- US-A1- 2003 179 229
- US-A1- 2004 052 342

## Description

The present invention relates to a terminal apparatus and a control method thereof, and more specifically, to a terminal apparatus controlled by a user's voice and a control method of the terminal apparatus.

With the development of electronic technologies, various terminal apparatuses are developed and provided. Recently, terminal apparatuses such as televisions (TV) are utilized at home. The terminal apparatuses have increasingly included various functions which are requested by users. Particularly, the TV connects to the Internet and supports Internet services. Thus, the user can watch numerous digital broadcasting channels with the TV.

European Patent Application EP 2,244,252 discloses an electronic apparatus and a voice recognition method, the voice recognition method includes: receiving an input voice of a user; determining characteristics of the user; and recognizing the input voice based on the determined characteristics of the user.

German Patent Application DE 202007009355 discloses a voice dialogue system in which speaker characterization can be additionally performed. In addition, the system can be used to produce a statistical evaluation of callers using information ascertained in the speaker characterization unit.

United States Patent Application US 2004/0052342 discloses a communication system for generating a response message to incoming messages. The system includes an interactive machine, a switchboard unit, a voice input module, and a voice output module.

United States Patent Application US 2003/0179229 discloses a system for automatically determining a user interface configuration, operation, and content of a computing or telecommunication device based upon userbiometrics.

Inputting methods utilizing the various functions of the terminal apparatus more efficiently are now necessary. For instance, inputting methods utilizing remote controllers, inputting methods utilizing a mouse, and inputting methods utilizing touch pads are applied in display apparatuses.

Further, a method for controlling the terminal apparatus in accordance with the user's voice based on an interactive system which outputs a signal corresponding to the user's voice is provided for more convenient and intuitional controlling. However, since the outputted voice is applied indiscriminately, differences in user's characteristics and preferences are not fully reflected.

Exemplary embodiments of the present disclosure overcome disadvantages including the above.

According to an aspect of the present invention, there is provided a terminal apparatus according to claim 1.

According to another aspect of the present invention, there is provided a control method of a terminal apparatus according to claim 10.

Optional features are set out in the dependent claims.

According to various exemplary embodiments, the user of the terminal apparatus can be provided with voice and message responses which take into consideration user's tendencies, hearing ability, or preferences.

The above and/or other aspects will be more apparent by describing certain exemplary embodiments with reference to the accompanying drawings, in which:
FIG. 1 is a diagram illustrating an interactive system according to an exemplary embodiment;
FIG. 2 is a timing diagram explaining the interactive system of FIG. 1 according to an exemplary embodiment;
FIG. 3 is a block diagram provided to explain the terminal apparatus of FIG. 1 according to an exemplary embodiment;
FIG. 4 is a block diagram provided to explain the detailed constitution of the terminal apparatus of FIG. 3 according to an exemplary embodiment;
FIG. 5 is a block diagram of the first server of FIG. 1 according to an exemplary embodiment;
FIG. 6 is a block diagram of the second server of FIG. 1 according to an exemplary embodiment;
FIG. 7 is a diagram provided to explain the operations of an interactive system according to an exemplary embodiment; and
FIG. 8 is a flowchart provided to explain a control method of the terminal apparatus according to an exemplary embodiment.
FIG.9 is a flowchart provided to explain a control method of the interactive system according to an exemplary embodiment.

Certain exemplary embodiments of the disclosure will now be described in greater detail with reference to the accompanying drawings.

In the following description, same drawing reference numerals are used for the same elements even in different drawings. The matters defined in the description, such as detailed construction and elements, are provided to assist in a comprehensive understanding of the disclosure. Accordingly, it is apparent that the exemplary embodiments can be carried out without those specifically defined matters. Also, well-known functions or constructions are not described in detail since they would obscure the disclosure with unnecessary detail.

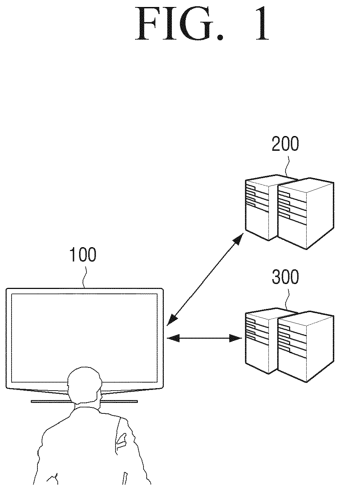

FIG. 1 illustrates an interactive system according to an exemplary embodiment. Referring to FIG. 1, the interactive system may include a terminal apparatus 100, a first server 200, and a second server 300. The terminal apparatus 100 may be a smart TV. However, this is merely one of the exemplary embodiments. The cellular phone such as a smart phone, a desktop PC, a laptop computer, or a GPS may be implemented as the terminal apparatus.

The terminal apparatus 100 may transmit the collected user's voice to the first server 200. If the user's voice is received from the terminal apparatus 100, the first server 200 may convert the received user's voice to text information, and transmit the text information to the terminal apparatus 100.

The terminal apparatus 100 may transmit the text information received from the first server 200 to the second server 300. If the text information is received from the terminal apparatus 100, the second server 300 may generate response information in response to the received text information and transmit the response information to the terminal apparatus 100.

Based on the response information, the terminal apparatus 100 may perform various functions. For instance, the terminal apparatus 100 may output a response message in response to user's voice. The response message may be outputted in the form of voice or text. For example, if the user's voice inquiring about the broadcasting time of a program is inputted, the terminal apparatus 100 may output the broadcasting time of the program in the form of voice or text.

Further, the terminal apparatus 100 may perform the functions in response to the user's voice. For instance, if a user's voice instructing to change a channel is inputted, the terminal apparatus 100 may tune to and display the channel. The terminal apparatus 100 may provide a response message in response to the corresponding function. The terminal apparatus 100 may output a message notifying the selected channel information and completing of the channel change in the form of voice or text.

The terminal apparatus 100 may analyze the collected user's voice and convert the response information transmitted from the second server to the voice signals having the user's voice features according to the analyzed user's voice. When outputting response information transmitted from the second server in the text form, the terminal apparatus 100 may output the text in the form corresponding to the analyzed user's voice. Thus, the user may be provided with the optimized answering voices and texts by the user's voice features.

FIG. 1 illustrates that the interactive system includes the terminal apparatus, the first server, and the second server, but the interactive system may be implemented as a terminal apparatus only or as a terminal apparatus and one server only. Also, the operations of the first server and the second server may be performed within the terminal apparatus in part or in whole.

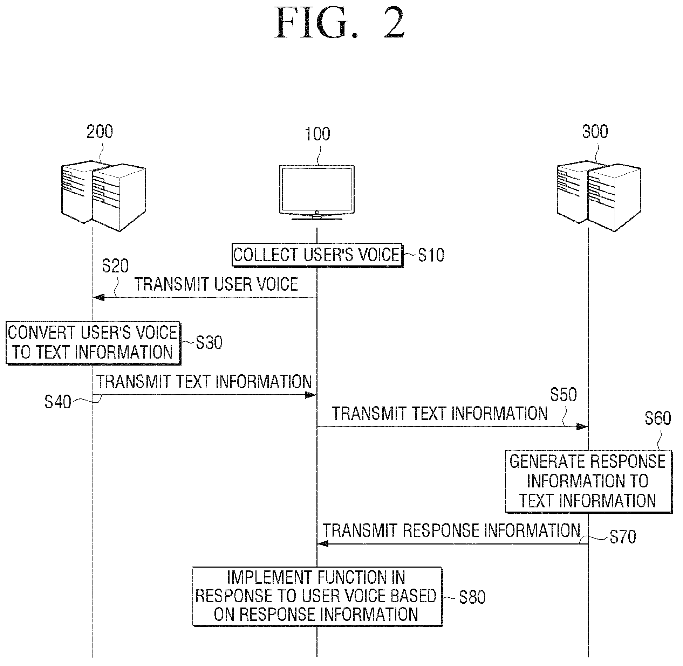

FIG. 2 is a timing diagram explaining the functions of the interactive system of FIG. 1.

Referring to FIG. 2, the terminal apparatus 100 may collect the user's voice at operation S10, and transmit a signal corresponding to the user's voice to the first server 200 at operation S20. Specifically, when the mode for collecting the user's voice begins, the terminal apparatus 100 may collect the voice uttered by the user within a predetermined distance and transmit the result to the first server 200.

The terminal apparatus 100 may be provided with a microphone for receiving the voice uttered by the user. The microphone may be integrally formed in the terminal apparatus 100 or may be separately provided. If the microphone is provided separately, the microphone may be so designed to be gripped by the user's hand, or can be placed on a table or other surface. However, this should not be considered as limiting, and the microphone may be mounted on a remote controller to control the display apparatus 100. The microphone may be connected to the terminal apparatus 100 in a wired manner or via a wireless network.

At operation S30, the first server 200 may convert the collected user's voice transmitted from the terminal apparatus 100 into text information. Specifically, the first server 200 may utilize the algorithms for the Speech to Text (STT) to convert the voice signals transmitted from the terminal apparatus 100 into the text information. At operation S40, the first server 200 may transmit the text information to the terminal apparatus 100.

At operation S50, the terminal apparatus 100 may transmit the text information transmitted from the first server 200 to the second server 300.

If the text information is received from the terminal apparatus 100, the second server 300 may generate response information in response to the text information.

The response information may include information for outputting the response message at the terminal apparatus 100 in response to the user's voice, i.e., response message information. For instance, in response to the user's voice asking, "When does the program "AAA" begin?" the second server 300 may transmit the information to the terminal apparatus 100 to output the response message, "Program "AAA" begins at 7 p.m. Saturday evening." in the form of voice or text.

The response information may include a control command to perform the function in response to the user's voice at the terminal apparatus 100. For instance, in response to the user's voice, "Record the program "AAA", please." the second server 300 may transmit the control command to perform the scheduled recording function of the program to the terminal apparatus 100. The response information may include the response message information regarding the scheduled recording function performed at the terminal apparatus 100. In the above case, the second server 300 may transmit the information to output the response message, "The program "AAA" is reserved for the recording." in the form of voice or text to the terminal apparatus 100.

At operation S80, the terminal apparatus may perform the function in response to the user's voice based on the received response information. Specifically, the terminal apparatus 100 may generate the response message in response to the user's voice based on the response message information included in the response information. For instance, if the text message of the response message information is received from the second server 300, the terminal apparatus 100 may convert the text form of the response message to the voice form and generate the voice by utilizing the Text to Speech (TTS) algorithms, or generate and output a User Interface (UI) screen including the text of the response message information.

The terminal apparatus 100 may analyze the collected user's voice, convert the response information transmitted from the second server to the voice signals having the user's voice features, and generate the voice signals. When outputting the response information transmitted from the second server in the text form, the terminal apparatus 100 may output the text in response to the analyzed collected user's voice. Thus, the user may be provided with the optimized voice or text based on the user's voice features.

Further, the terminal apparatus 100 may perform the function in response to the user's voice based on the control command included in the response information. For instance, if the control command to implement the scheduled recording of the broadcasting program is transmitted from the second server 300, the terminal apparatus 100 may perform the scheduled recording function regarding the ordered broadcasting program.

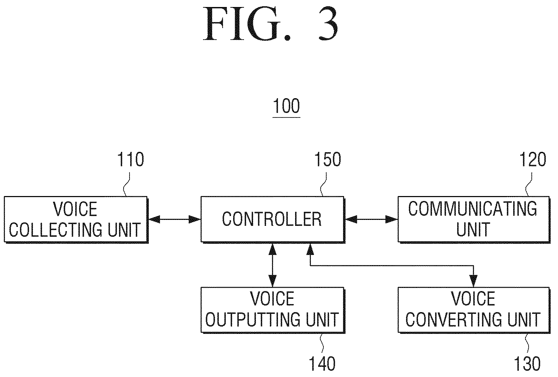

FIG. 3 is a block diagram illustrating the terminal apparatus of FIG. 1. Referring to FIG. 3, the terminal apparatus 100 may include a voice collecting unit 110, a communicating unit 120, a voice converting unit 130, a voice outputting unit 140 and a controller 150.

The voice collecting unit 110 may collect the user's voice. For instance, the voice collecting unit 110 may be a microphone which collects the user's voice. The microphone may be integrally formed in the terminal apparatus 100 or may be provided separately. If provided separately, the voice collecting unit 110 may be so designed to be gripped by the user's hand or may be placed on a table or other surface, and may transmit the collected user's voice to the terminal apparatus 100 in a wired manner or via a wireless network. However, the microphone is not so limited, and any other microphone may be utilized.

The voice collecting unit 110 may process the collected user's voice and generate the voice signals. The voice collecting unit 110 may delete or disregard noises, for instance, air conditioner sounds, vacuum cleaner sounds, or musical sounds, from the collected user's voice, and generate voice signals.

Specifically, if the user's voice in the analog format is inputted, the voice collecting unit 110 may convert the user's voice into digital signals. Thus, the voice collecting unit 110 may calculate the energy of the converted digital signals and determine whether or not the digital signal energy is greater than a predetermined value.

If the digital signal energy is greater than the predetermined value, the voice collecting unit 110 may delete noise from the digital signals and transmit the resultant signals to the communicating unit 120. The noise may occur within a home, such as air conditioner sounds, vacuum cleaner sounds, or musical sounds. If the digital signal energy is less than the predetermined value, the voice collecting unit 110 may not process the digital signals and stand-by for another input. Thus, because the entire audio processing may not be activated by sounds other than the voice uttered by the user, unnecessary power consumption is saved. In effect, only the user's voice above a certain sound level would activate the audio processing step.

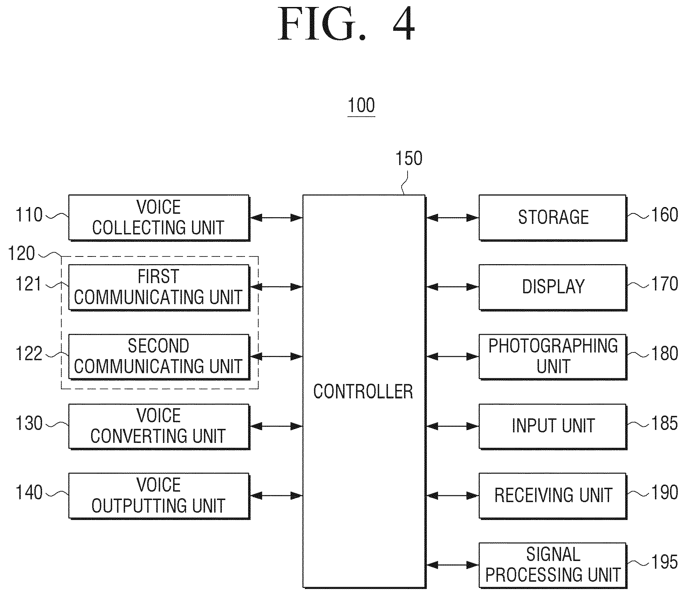

The communicating unit 120 may communicate with external servers 200, 300. The communicating unit 120 may be implemented as a first communicating unit 121 of FIG. 4 and a second communicating unit 122 of FIG. 4.

The first communicating unit 121 may communicate with the first server 200 of FIG. 1. Specifically, the first communicating unit 121 may transmit the user's voice to the first server 200 and receive the text information in response to the user's transmitted voice from the first server 200.

The second communicating unit 122 may communicate with the second server 300 of FIG. 1. Specifically, the second communicating unit 122 may transmit the received text information to the second server 300 and receive the response information in response to the text information from the second server 300.

The first communicating unit 121 and the second communicating unit 122 may include various communicating modules such as the short distance wireless communicating module (not illustrated) and the wireless communicating module (not illustrated). The short distance communicating module may refer to a module communicating with external devices which are located in close proximity by a short distance communication standard such as Bluetooth or ZigBee. Further, the wireless communicating module may refer to the module connecting to the external network by the wireless communicating protocol such as WiFi or IEEE for implementation of communicating. The wireless communicating module may further include a mobile communicating module connected to the mobile communicating network by the 3rd Generation (3G), the 3rd Generation Partnership Project (3GPP), or the Long Term Evolution (LTE) for implementation of communicating.

In the above exemplary embodiment, the terminal apparatus 110 may be provided with the separate communicating units 121, 122 to communicate with the first server 200 and the second server 300. However, this is merely one of the exemplary embodiments. The terminal apparatus 100 may communicate with the first server 200 and the second server 300 with one communicating module.

The voice converting unit 130 may convert the received response information from the second server into voice signals. The response information converted into the voice signals may be outputted from the voice outputting unit 140.

The voice outputting unit 140 may output the voice signals converted at the voice converting unit 130. The voice outputting unit 140 may be an outputting port such as a speaker or a jack, and may output the voice signals converted at the voice converting unit 130.

The controller 150 may control the overall operation of the terminal apparatus 100. Specifically, the controller 150 may control the voice collecting unit 110, the communicating unit 120, the voice converting unit 130, and the voice outputting unit 140 to perform the responding functions, respectively.

The controller 150 may analyze the user's voice collected at the voice collecting unit 110, and control the voice collecting unit 130 to convert the response information transmitted from the second server into the voice signals having the voice features based on the analyzed user's voice. The controller is configured to analyze the sound, wave and/or acoustic properties and characteristics of the user's voice input. Particularly, the controller 150 may analyze at least one of the user's voice frequencies, voice tones, and voice volumes, variations or ranges thereof. After the analyzing, the controller may determine at least one of the gender and age of the user, and control the voice converting unit 130 to convert the response information to the voice signals having the voice features corresponding to at least one of the gender and age of the user. The voice features may be frequencies, tones, and volumes. The controller 150 may control so that at least one of the frequencies, the tones, and the volumes corresponds to at least one of the gender and age of the user.

For instance, if the voice collecting unit 110 collects the voice uttered by a man in his 60s, the controller 150 may analyze at least one of the frequencies, the tones, and the volumes of the utterances made by the man, and determine that the user is male in his 60s. When determining the gender and the age of the user, the controller 150 may find the gender and the age closest to those of the user based on a database comprising an average frequency, an average tone, and an average volume corresponding to predetermined ages and the genders. If determining the user to be a 60-year-old man, the controller 150 may convert the voice features of the voice signals to be outputted according to the hearing features of the average 60-year-old man. For instance, considering the fact that the senior's hearing may gradually deteriorate from the high frequency range, the voice signals may be converted to have a lower frequency compared to the average man. The voice features to be converted may be determined based on the database of the audible frequency range, the most convenient average frequency, and the most comfortable average tone.

FIG. 4 is a block diagram illustrating a detailed constitution of the terminal apparatus of FIG. 3. Referring to FIG. 4, in addition to the previously described units of FIG. 3, the terminal apparatus 100 may further include a storage 160, a display 170, a photographing unit 180, an input unit 185, a receiving unit 190, and a signal processing unit 195. The similar elements in FIGS. 3 and 4 have the same functions and operations, and therefore, these will not be explained in detail for the sake of brevity.

The storage 160 may store first information including the user's feature information based on the voice features. The voice features may include at least one of frequencies, tones, and volumes, and the user's feature information may include at least one of the gender and the age of the user. In other words, the voice features are characterizing properties of the user which are indicative of the user's preference or profile, including one's gender and age. Further, the storage 160 may further store the first information and the second information, including the outputted voice feature information corresponding to the user feature information. The outputted voice feature information may be feature information such as the frequencies or the tones of the voice to be outputted from the voice outputting unit 140.

The first information may be utilized in analyzing the user's voice collected by the voice collecting unit 110 and determining the user's features. The second information may be utilized when the controller 150 converts the response information into the voice features according to the result of analyzing. The controller 150 may determine the age and the gender of the user according to the voice features that are closest to the user's age and gender, by comparing the collected user's voice and the voice features with the voice features of the first information. The controller 150 may compare the determined age and gender of the user with those of the second information and determine the voice features to be outputted according to the voice features of the user's age and gender as determined.

After the controller 150 analyzes the collected user's voice, the storage 160 may match the analyzed user's voice with the third information, i.e., with the corresponding voice feature information. The third information may enable the controller 150 to determine the voice features to be outputted based on the analyzed collected user's voice without having to determine the user's age and gender or irrespective of the result of the determination (if determined). If the voice features of the collected user's voice are compared with the third information and the matching information is found, the controller 150 may determine the voice features to be outputted based on the voice features of the collected user's voice without determining the user's age and gender.

The third information may additionally include user identifier information so that the user may set the information of the voice features to be outputted. The storage 160 may store the previously analyzed voice features of the user's voice, the user identifier information, and the information of the voice features to be outputted. The user may check the user identifier information and change the voice features to be outputted to match with his or her voice features.

The display 170 may provide a display screen to the user. Specifically, the display may be Liquid Crystal Display (LCD), Organic Light Emitting Display (OLED), or Plasma Display Panel (PDP), and may provide various displaying screens through the terminal apparatus 100. Specifically, the display 170 may display the response message in response to the user's voice in the text or the image form.

Under control of the controller 150, the display 170 may display the response message in response to the user's voice in the form corresponding to the analyzed user's voice. Specifically, at least one of the object size, the object color, the object form and the object shape of the response message may be displayed according to the analyzed user's voice. The response message form to be outputted may be determined in a similar manner as that in which the voice features to be outputted are determined based on the analyzed collected user's voice.

For instance, if the user is 7 years old, since children may not be accustomed to small text or small images, the display 170 may display the object of the response message in a larger size to facilitate easier viewing by the 7-year-old child. Further, a more colorful and playful form of the image or the text may be displayed in favor of the 7-year-old child.

The photographing unit 180 may photograph the user. Specifically, the photographing unit 180 may photograph the facial area of the user by utilizing the terminal apparatus 100. The photographing unit 180 may be implemented as a camera. The photographing unit 180 may be installed within the terminal apparatus 100 or may be an external device connected to the terminal apparatus 100 in a wired manner or wirelessly.

The controller 150 may analyze the user's images photographed by the photographing unit 180 and determine at least one of the user's gender and age. Particularly, the results of analyzing the user's images may be utilized in analyzing the collected user's voice and determining the user's age and gender.

The input unit 185 may receive various user manipulations and transmit the inputted information to the controller 150. The input unit 185 may be an input panel. The input panel may include keypad including the function keys, number keys, special keys, and character keys, or a touch screen. Further, the input unit 185 may be an infra-red (IR) receiving unit (not illustrated) which receives the remote controller signals transmitted from the remote controller to control the terminal apparatus 100. However, the input unit is not limited thereto.

The input unit 185 may receive various user manipulations to control the functions of the terminal apparatus 100. For instance, if the terminal apparatus 100 is smart TV, the terminal apparatus 100 may receive the user manipulation to control the functions of the smart TV such as a command to turn on or off the TV, change channels, or change the volume of the TV. The controller 150 may control the other units to perform the proper functions in response to the user manipulation inputted at the input unit 185. For instance, the controller 150 may cut the power supply to the components of the terminal apparatus 100 if the command to turn on or off is inputted, and control the receiving unit 190 to tune to the channel chosen by the user manipulation if the command for changing channels is inputted.

Specifically, the input unit 185 may receive the user manipulation to start the voice recognition mode for recognizing and collecting the user's voice. For instance, the input unit 185 may be implemented as the touch screen with the display and display the object such as an icon receiving the voice recognition mode. The input unit 185 may be provided with the buttons for receiving the voice recognition mode. If the user manipulation starting the voice recognizing mode is inputted at the input unit 185, the controller 150 may activate the voice collecting unit 110 and collect the user's voice uttered within the predetermined distance. The controller 150 may receive the response information in response to the user's voice by communicating with the first server 200 and the second server 300, generate the response message, and control to perform certain functions.

The receiving unit 190 may receive various contents. Specifically, the receiving unit 190 may receive the contents from the broadcasting station for transmitting the broadcasting program contents using the broadcasting network or Internet server for transmitting the contents files using the Internet. Further, the receiving unit 190 may receive the contents from the various recording medium playback devices installed in or connected to the terminal apparatus 100. The recording medium playback device may refer to a device which plays back the contents stored in various recording medium such as CDs, DVDs, hard disks, Blu-ray disks, memory cards, or USB memories.

If the contents are received from the broadcasting station, the receiving unit 190 may include a tuner (not illustrated), a demodulator (not illustrated), and an equalizer (not illustrated). If the contents are received from the sources such as the Internet server, the receiving unit 190 may be the interface (not illustrated) connected to the recording medium playback device. The receiving unit 190 may be implemented as various constitutions according to exemplary embodiments.

The signal processing unit 195 may process the signals of the contents to output the contents transmitted from the receiving unit 190 to the display 170.

Specifically, the signal processing unit 195 may perform decoding, scaling, or frame rate conversion regarding the video signals included in the contents and convert the video signals to a suitable form to be outputted through the display 170. Further, the signal processing unit 195 may process the signals such as decoding the audio signals included in the contents, and convert the audio signals to a suitable form that can be outputted through the voice outputting unit 140.

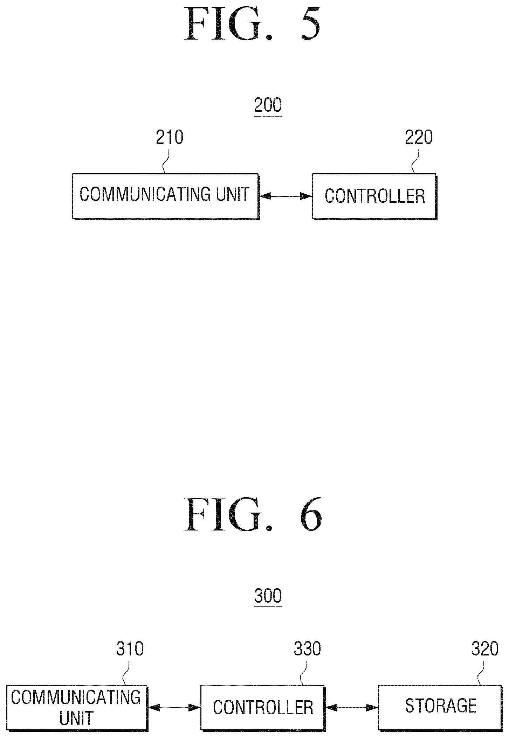

FIG. 5 is a block diagram for explaining the first server of FIG. 1. Referring to FIG. 5, the first server 200 may include a communicating unit 210 and a controller 220.

The communicating unit 210 may communicate with the terminal apparatus 100. Specifically, the communicating unit 210 may receive the user's voice from the terminal apparatus 100 and transmit the text information in response to the user's voice to the terminal apparatus 100. The communicating unit 210 may include the various communicating modules such as a short distance wireless communicating module (not illustrated) or a wireless communicating module (not illustrated).

The controller 220 may control the overall operation of the first server 200. Specifically, if the user's voice is received from the terminal apparatus 100, the controller 220 may generate the text information of the user's voice and control the communicating unit 210 to transmit the generated text information to the terminal apparatus 100.

Specifically, the controller 220 may utilize a speech-to-text (STT) engine and generate text information of the user's voice. The STT engine may be the module for converting the voice signals into the texts and may convert the voice signals into the texts by utilizing the STT algorithms.

For instance, the controller 220 may determine the voice segment by detecting the start and the end of the voice uttered by the user within the received voice signals. Specifically, the controller 220 may calculate the energy of the received voice signals, classify the energy level of the voice signals, and detect the voice segment by the dynamic programming. The controller 220 may detect the voice phoneme based on the Acoustic Model within the detected voice segment, generate the voice phoneme data, apply the probability model (i.e., the Hidden Markov Model (HMM)) to the phoneme data, and generate the text information.

FIG. 6 is a block diagram provided to illustrate the second server of FIG. 1. Referring to FIG. 6, the second server 300 may include a communicating unit 310, a storage 320, and a controller 330.

The communicating unit 310 may communicate with the terminal apparatus 100. Specifically, the communicating unit 310 may receive text information from the terminal apparatus 100, and transmit response information in response to the received text information to the terminal apparatus 100. The communicating unit 310 may include the various communicating modules such as a short distance wireless communicating module (not illustrated) and a wireless communicating module (not illustrated).

The storage 320 may store various information to generate the response information in response to the text information received from the terminal apparatus 100.

Specifically, the storage 320 may store a pre-defined speech action, a pre-defined main action, and a pre-defined essential unit. For instance, regarding the broadcasting domain, the speech action may include the Statement, the Request, the what-if Question, and the Yes-No Question, the main action may include turning on or off the terminal apparatus, searching for programs, searching programming time, and reserving programs, and the essential unit may include the genre, the program title, the program starting time, the channel title, and the name of the actor/actress in a specific program.

Further, the storage 320 may include a corpus database storing in each domain the answer in response to the intention of an utterance made by the user. For instance, regarding the broadcasting service domain, the answer in response to the user's intention for uttering an inquiry about the program genre may be stored as "The program genre is "XXX"." The answering in response to the user's intention for uttering inquiry about the program starting time may be stored as "The program starting time is XX."

The storage 320 may store the control command matched with the user's intention for uttering. For instance, if the user's intention for uttering is to change the channel, the storage 320 may match and store the control command to change the channel of the terminal apparatus 100. If the user's intention for uttering is to reserve the recording of the program, the storage 320 may match and store the control command to implement the scheduled recording of the program at the terminal apparatus 100.

The controller 330 may control the second server 300. Specifically, if the text information in response to the user's voice is received from the terminal apparatus 100 by the communicating unit 310, the controller 330 may generate the response information in response to the received text information, and control the communicating unit 310 to transmit the generated response information to the terminal apparatus 100.

Specifically, the controller 330 may utilize the speech action, main action and the essential unit, to determine the user's intention for uttering in response to the text information received from the terminal apparatus 100, and generate the control command and the response information in response to the user's intention for uttering.

For instance, it is assumed that the text indicating "Schedule recording of the program." is received from the terminal apparatus 100. The controller 330 may determine the received text to be the "request"-related phrase by utilizing the speech action, and determine that the user intends to schedule a recording of the program by utilizing the main action and the essential unit. As a result, the controller 330 may determine the intent of the user based on the received text information is to request the scheduled recording of the program.

Thus, the controller 330 may generate a control command to implement the scheduled recording of the program at the terminal apparatus 100 according to the user's intention for uttering which "requests" the scheduled recording of the program. The controller 330 may utilize the corpus database, additionally generate the response message information advising that "The program is reserved for recording." in the text form, and transmit the response message information with the control command to the terminal apparatus 100.

Further, it is assumed that the text indicating: "When does the program begin?" is received from the terminal apparatus 100. The controller 330 may determine the received text to be a "questioning" phrase by utilizing the speech action, and determine that the user intends to know the program starting time by utilizing the main action and the essential unit. As a result, the controller 330 may determine the user's intention for uttering in response to the received text information is to request the program starting time.

Thus, the controller 330 may utilize the Electronic Program Guide (EPG) information regarding the user's intention for uttering that "inquires" about the program starting time, search the program starting time, generate the response message information, "The program begins at 7 p.m. Saturday evening." in text form, and transmit the response message information to the terminal apparatus 100.

If the phrases of the response message are stored in the terminal apparatus 100, the controller 330 may transmit the text to the terminal apparatus 100 to complete the responding phrase.

For instance, it is assumed that the text indicating: "Change to the channel "X"." is received from the terminal apparatus 100. The controller 330 may determine the received text to be a "requesting" phrase by utilizing the speech action, and determine that the user intends to change to the channel "X" by utilizing the main action and the essential unit. As a result, the controller 330 may determine the user's intention for uttering in response to the received text information is to request the changing of the channel to the channel "X".

The controller 330 may transmit the control command directing to change to the channel X to the terminal apparatus 100. If the terminal apparatus 100 stores the text data such as "The channel is changed to...," the controller 330 may generate and transmit the response message information, "X" with the control command to output the response message, "The channel is changed to X." at the terminal apparatus 100.

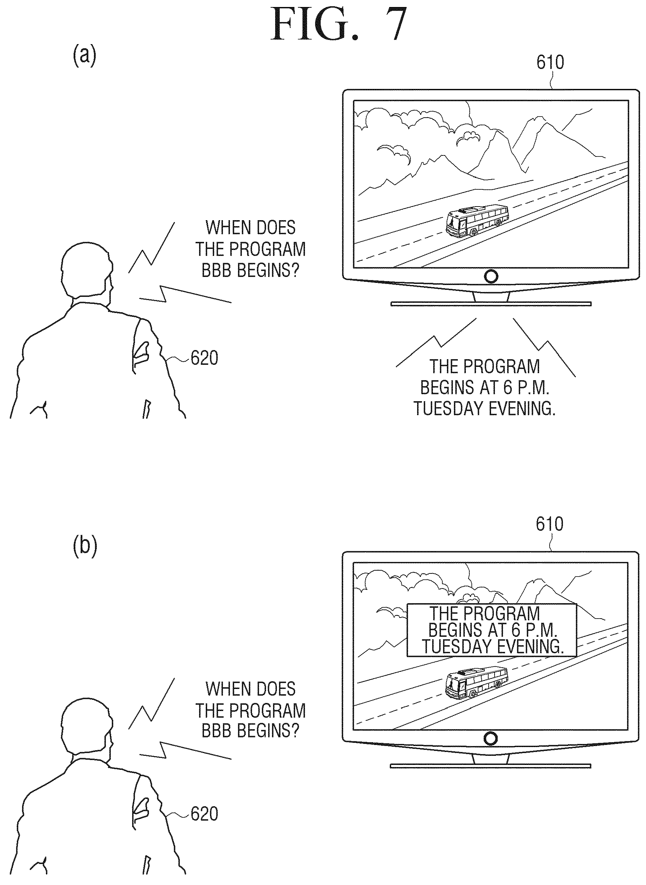

FIG. 7 is a diagram which illustrates an interactive system according to an exemplary embodiment.

Referring to FIG. 7A, it is assumed that a 40-year-old man 620 currently watching a program "AAA" says, "When does the program "BBB" begin?" The terminal apparatus 610 may generate the response message in response to the question "When does the program "BBB" begin?" collected by interoperation with a server (not illustrated). Specifically, if the server determines the user's intention for uttering "When does the program "BBB" begin?", the terminal apparatus 610 may receive the response information from the server.

Further, the terminal apparatus 610 may collect the uttered voice of the user 620, analyze the collected user's voice, determine the tone of the uttered voice in response to the analyzing, and output a response "The program "BBB" begins at 6 p.m. Tuesday evening." with the determined voice tone in response to the question "When does the program "BBB" begins?" based on the response information.

In the above exemplary embodiment, the terminal apparatus 610 may output the response message in voice form. However, referring to FIG. 7B, the terminal apparatus 610 may output "The program begins at 6 p.m. Tuesday evening." in a text form on the display screen in response to the analyzed collected voice of the user 620. The text form may be used in addition to, or as an alternative to, the response message in voice form.

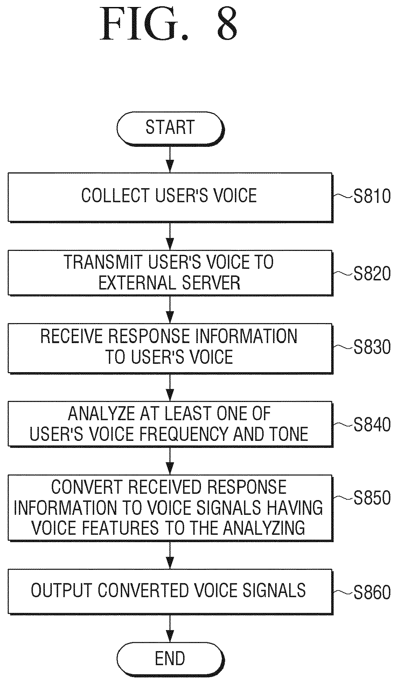

FIG. 8 is a flowchart illustrating a control method of a terminal apparatus according to an exemplary embodiment.

At operation S810, the user's voice may be collected. Specifically, with the microphone provided integrally within the terminal apparatus or provided separately from the terminal apparatus, the user's voice may be collected.

At operation S820, the user's voice may be transmitted to the external sever, and at operation S830, response information in response to the user's voice may be received from the external server. Specifically, the collected user's voice may be transmitted to the first server, and text information in response to the user's voice may be received at the terminal apparatus from the first server. The received text information may be transmitted by the terminal apparatus to the second server, and response information in response to the text information may be received by the terminal apparatus from the second server.

At operation S840, voice features in the collected user's voice, for example, at least one of the frequency, the tone, and the volume, may be analyzed. Specifically, by analyzing the voice features of the user's voice, the user features, at least one of the age and the gender, may be found.

At operation S850, the received response information may be converted into the voice signals having the voice features in response to the analyzing, and at operation S860, the converted voice signals may be outputted. As a result of the analyzing, the outputted voice features, at least one of the frequency, the tone, and the volume of the response information, may be determined.

The control method of the terminal apparatus according to an exemplary embodiment may additionally include storing the user features information (first information) corresponding to the user voice features and the outputted frequency information (second information) corresponding to the user features. The analyzing at operation S840 may include comparing the voice features of the collected user's voice with the stored voice features and determining the user's features. The converting at operation S850 may include comparing the determined user's features with the second information and determining the outputted voice features.

Further, the method may additionally include photographing the user image. The analyzing at operation S840 may include analyzing the photographed user images and determining the user features. Specifically, the result of analyzing the user's image may be utilized in determining the user's features.

If the collected user's voice is analyzed and the outputted voice features in response to the analyzing are determined, the method may additionally include storing the analyzed user's voice features and the determined outputted voice features. The converting at operation S850 may include converting the received response information into the voice signals having the outputted voice features, if the voice features of the newly collected voice are the same as the stored user's voice features.

The displaying the response message according to the received response information in response to the analyzing results may be additionally included. The displaying may include outputting at least one of an object size, an object color, an object shape, and an object form constituting the response message in the form corresponding to the analyzed results.

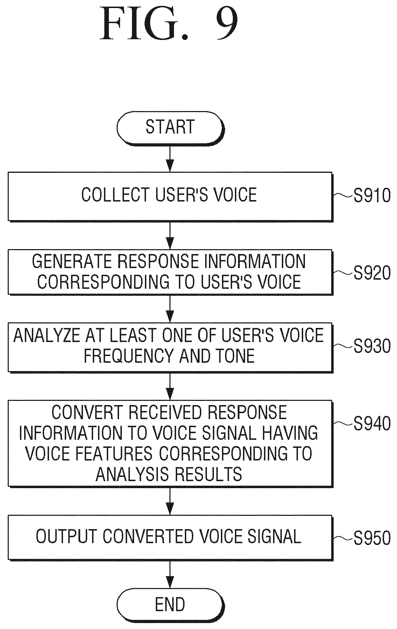

FIG.9 is a flowchart provided to explain a control method of the interactive system according to an exemplary embodiment. The interactive system may be implemented as a terminal apparatus only or as a terminal apparatus and at least one of the server. Each step performed for the control method of the interactive system may be performed by the terminal apparatus or at least one server according to an exemplary embodiment.

At operation S910, a user's voice is collected. Specifically, with the microphone provided integrally within the terminal apparatus or provided separately from the terminal apparatus, the user's voice may be collected.

At operation S920, response information in response to the received user's voice is generated. Specifically, the response information may generate text information in response to the user's voice and the response information in response to the text information.

At operation S930, voice features of the collected user's voice (at least one of the frequency, the tone, and the volume) is analyzed. Specifically, by analyzing the voice features of the user's voice, the user features (at least one of the age and the gender) may be found. Meanwhile, the step of generating the response information S920 and the step of analyzing the voice features of the user's voice S930 may be performed regardless of order.

At operation S940, the generated response information is converted into a voice signal having the voice features in response to the analysis result, and at operation S950, the converted voice signal is outputted. That is, the voice output features (at least one of the frequency, the tone, and the volume) of response information, may be determined in accordance with the analysis result.

Thus, the terminal apparatus may output the response information in voice and message forms, by considering a choice of the user, the user's hearing ability, or likes and dislikes of the user.

The control method of the terminal apparatus according to the various exemplary embodiments may be implemented as a program that can run on the terminal apparatus. The program may be stored and utilized in various types of recording medium.

Specifically, the codes for implementing the control method may be stored in various types of the non-volatile recording medium such as the flash memory, the Read Only Memory (ROM), the Erasable Programmable ROM (EPROM), the Electronically Erasable and Programmable ROM (EEPROM), the hard disk, the removable disk, the memory card, the USB memory, and the CD-ROM.

Further, although the above block diagram describing the user terminal apparatus, the display apparatus and the server does not include the bus, the communication between the units of the user terminal apparatus, the display apparatus, and the server may be implemented with the bus. Each device may further include the processor such as the CPU or the micro processor implementing the above steps.

The foregoing exemplary embodiments and advantages are merely exemplary and are not to be construed as limiting the disclosure. The present teaching can be readily applied to other types of apparatuses. Also, the description of the exemplary embodiments of the disclosure is intended to be illustrative, and not to limit the scope of the claims, and many alternatives, modifications, and variations will be apparent to those skilled in the art.

## Claims

1. A terminal apparatus (100), comprising:
a voice collecting unit (110) which is arranged to collect a user's voice, and to generate a first voice signal;
a communicating unit (120) which is arranged to transmit the first voice signal to an external server (200, 300), and which is arranged to receive response information from the external server based on the transmitted first voice signal;
a voice converting unit (130) which is arranged to convert the received response information into voice response signals;
a response outputting unit (140) which is arranged to output the voice response signals to the user;
a display (170) which is arranged to display a response message based on the response information; and
a controller (150) which is arranged to analyse characterizing properties of the collected user's voice to determine user information, and to control the voice converting unit to convert the received response information into voice response signals which have features that correspond to the result of the determination;
**characterised in that**
the controller is arranged to control the display (170) to display the response message in a different display form that corresponds to the result of the determination.

2. The terminal apparatus (100) of claim 1, wherein the external server (200, 300) comprises a first server (200) and a second server (300), and
the communicating unit (120) comprises a first communicating unit (121) which is arranged to transmit the first voice signal to the first server and receives text information which corresponds to the first voice signal from the first server, and a second communicating unit (122) which is arranged to transmit the received text information to the second server and to receive response information which corresponds to the text information from the second server.

3. The terminal apparatus (100) of claim 1 or 2, wherein the controller (150) is arranged to analyse at least one of the frequency and the tone of the user's voice as the characterizing properties, and to determine as the user information at least one of a gender and an age of the user.

4. The terminal apparatus (100) of any one of the preceding claims, wherein the response signals are second voice signals, and the response outputting unit (140) is a voice outputting unit which outputs the second voice signals.

5. The terminal apparatus (100) of claim 4, wherein the controller (150) is arranged to convert the response information into the second voice signals which have an output frequency which corresponds to a result of the determination.

6. The terminal apparatus (100) of claim 5, further comprising:
a storage (160) which is arranged to store first information which comprises at least one of the gender and the age of the user which corresponds to at least one of the frequency and the tone of the user's voice, and second information which comprises output frequency information which corresponds to at least one of the gender and the age of the user, wherein
the controller (150) is arranged to compare at least one of the frequency and the tone of the user's voice with the first information, to determine the at least one of the gender and age of the user, to compare the determined at least one of the gender and the age of the user with the second information, and to determine the output frequency.

7. The terminal apparatus (100) of claim 5 or 6, further comprising:
a photographing unit (180) which is arranged to photograph an image of the user, wherein
the controller (150) is arranged to analyse the photographed image and to determine at least one of the gender and the age of the user.

8. The terminal apparatus (100) according to any one of claims 4 to 7, further comprising:
a storage (160) which is arranged to store at least one of the frequency and the tone of the analyzed user's voice, and corresponding voice features, wherein
the controller (150) is arranged to convert the received response information into the second voice signals which have the voice features stored in the storage, if at least one of the frequency and the tone of the collected user's voice is the same as at least one of the frequency and the tone of the user's voice stored in the storage.

9. The terminal apparatus (100) of claim 1, wherein the controller (150) is arranged to control so that at least one of an object size, an object color, an object shape, and an object form which constitutes the response message, is outputted in a manner which corresponds to the result of the analyzing.

10. A control method of a terminal apparatus (100), the method comprising:
collecting a user's voice (S810) and generating a first voice signal;
transmitting the first voice signal (S820) to an external server (200, 300) and receiving response information based on the transmitted first voice signal (S830);
analyzing characterizing properties of the collected user's voice to determine user information;
converting the received response information into voice response signals which have features corresponding to a result of the determination (S850);
outputting the voice response signals to the user (S860);
displaying a response message in a different display form that corresponds to the result of the determination.

11. The control method of claim 10, wherein the external server (200, 300) comprises a first server (200) and a second server (300), and
the transmitting the first voice signal (S820) and receiving the response information based on the transmitted first voice signal (S830) comprises,
transmitting the first voice signal to the first server (200),
receiving text information corresponding to the first voice signal from the first server,
transmitting the received text information to the second server (300), and receiving response information corresponding to the text information from the second server.

12. The control method of claim 10 or 11, wherein the analyzing (S840) comprises analyzing at least one of the frequency and the tone of the user's voice, and determining at least one of a gender and an age of the user, and
the converting (S850) comprises converting the response information into the second voice signals having an output frequency corresponding to a result of the determining.

13. The control method of claim 12, further comprising:
storing first information comprising at least one of the gender and the age of the user corresponding to at least one of the frequency and the tone of the user's voice, and second information which comprises output frequency information corresponding to the at least one of the gender and the age of the user, wherein
the analyzing (S840) comprises comparing at least one of the frequency and the tone of the user's voice with the first information, and determining at least one of the gender and the age of the user, and
the converting (S850) comprises comparing the at least one of the determined gender and age of the user with the second information, and determining the output frequency.

14. The control method according to anyone of claim 10 to 13, further comprising storing at least one of the frequency and the tone of the analyzed user's voice, and corresponding voice features, wherein
the converting (S850) comprises converting the received response information into the second voice signals having the voice features stored in the storage, if at least one of the frequency and the tone of the collected user's voice is the same as at least one of the frequency and the tone of the user's voice stored in the storage.

## Patentansprüche

1. Endgerätevorrichtung (100), die Folgendes umfasst:
eine Stimmerfassungseinheit (110), die zum Erfassen der Stimme eines Benutzers und zum Erzeugen eines ersten Stimmsignals ausgelegt ist;
eine Kommunikationseinheit (120), die zum Senden des ersten Stimmsignals zu einem externen Server (200, 300) ausgelegt ist und zum Empfangen von Antwortinformationen von dem externen Server auf der Basis des gesendeten ersten Stimmsignals ausgelegt ist;
eine Stimmumwandlungseinheit (130), die zum Umwandeln der empfangenen Antwortinformationen in Stimmantwortsignale ausgelegt ist;
eine Antwortausgabeeinheit (140), die zum Ausgeben der Stimmantwortsignale an den Benutzer ausgelegt ist;
eine Anzeige (170), die zum Anzeigen einer Antwortnachricht auf der Basis der Antwortinformationen ausgelegt ist; und
einen Controller (150), der zum Analysieren von charakterisierenden Eigenschaften der erfassten Stimme des Benutzers, um Benutzerinformationen zu ermitteln, und zum Steuern der Stimmumwandlungseinheit zum Umwandeln der empfangenen Antwortinformationen in Stimmantwortsignale ausgelegt ist, die Merkmale haben, die dem Ergebnis der Ermittlung entsprechen;
**dadurch gekennzeichnet, dass**
der Controller zum Steuern der Anzeige (170) zum Anzeigen der Antwortnachricht in einer anderen Anzeigeform ausgelegt ist, die dem Ergebnis der Ermittlung entspricht.

2. Endgerätevorrichtung (100) nach Anspruch 1, wobei der externe Server (200, 300) einen ersten Server (200) und einen zweiten Server (300) umfasst, und
die Kommunikationseinheit (120) eine erste Kommunikationseinheit (121), die zum Senden des ersten Stimmsignals zum ersten Server ausgelegt ist und Textinformationen empfängt, die dem ersten Stimmsignal vom ersten Server entsprechen, und eine zweite Kommunikationseinheit (122) umfasst, die zum Senden der empfangenen Textinformationen zum zweiten Server und zum Empfangen von Antwortinformationen ausgelegt ist, die den Textinformationen vom zweiten Server entsprechen.

3. Endgerätevorrichtung (100) nach Anspruch 1 oder 2, wobei der Controller (150) zum Analysieren der Frequenz und/oder des Tons der Stimme des Benutzers als charakterisierende Eigenschaften und zum Ermitteln des Geschlechts und/oder des Alters des Benutzers als Benutzerinformationen ausgelegt ist.

4. Endgerätevorrichtung (100) nach einem der vorherigen Ansprüche, wobei die Antwortsignale zweite Stimmsignale sind und die Antwortausgabeeinheit (140) eine Stimmausgabeeinheit ist, die die zweiten Stimmsignale ausgibt.

5. Endgerätevorrichtung (100) nach Anspruch 4, wobei der Controller (150) zum Umwandeln der Antwortinformationen in die zweiten Stimmsignale ausgelegt ist, die eine Ausgangsfrequenz haben, die einem Ergebnis der Ermittlung entspricht.

6. Endgerätevorrichtung (100) nach Anspruch 5, die ferner Folgendes umfasst:
einen Speicher (160), der zum Speichern von ersten Informationen, die das Geschlecht und/oder das Alter des Benutzers umfassen, die der Frequenz und/oder dem Ton der Stimme des Benutzers entsprechen, und von zweiten Informationen ausgelegt ist, die Ausgangsfrequenzinformationen umfassen, die dem Geschlecht und/oder dem Alter des Benutzers entsprechen, wobei
der Controller (150) zum Vergleichen der Frequenz und/oder des Tons der Stimme des Benutzers mit den ersten Informationen, zum Ermitteln des Geschlechts und/oder des Alters des Benutzers, zum Vergleichen des ermittelten Geschlechts und/oder Alters des Benutzers mit den zweiten Informationen und zum Ermitteln der Ausgangsfrequenz ausgelegt ist.

7. Endgerätevorrichtung (100) nach Anspruch 5 oder 6, die ferner Folgendes umfasst:
eine Fotografiereinheit (180), die zum Fotografieren eines Bildes des Benutzers ausgelegt ist, wobei
der Controller (150) zum Analysieren des fotografierten Bildes und zum Ermitteln des Geschlechts und/oder des Alters des Benutzers ausgelegt ist.

8. Endgerätevorrichtung (100) nach einem der Ansprüche 4 bis 7, die ferner Folgendes umfasst:
einen Speicher (160), der zum Speichern der Frequenz und/oder des Tons der analysierten Stimme des Benutzers und entsprechender Stimmmerkmale ausgelegt ist, wobei
der Controller (150) zum Umwandeln der empfangenen Antwortinformationen in die zweiten Stimmsignale ausgelegt ist, die die im Speicher gespeicherten Stimmmerkmale haben, wenn die Frequenz und/oder der Ton der erfassten Stimme des Benutzers dieselben sind wie die Frequenz und/oder der Ton der im Speicher gespeicherten Stimme des Benutzers.

9. Endgerätevorrichtung (100) nach Anspruch 1, wobei der Controller (150) so ausgelegt ist, dass er so steuert, dass wenigstens eines aus einer Objektgröße, einer Objektfarbe, einer Objektgestalt und einer Objektform, die die Antwortnachricht bildet, in einer Weise ausgegeben wird, die dem Ergebnis der Analyse entspricht.

10. Verfahren zum Steuern einer Endgerätevorrichtung (100), wobei das Verfahren Folgendes beinhaltet:
Erfassen der Stimme (S810) eines Benutzers und Erzeugen eines ersten Stimmsignals;
Senden des ersten Stimmsignals (S820) zu einem externen Server (200, 300) und Empfangen von Antwortinformationen auf der Basis des gesendeten ersten Stimmsignals (S830);
Analysieren von charakterisierenden Eigenschaften der erfassten Stimme des Benutzers, um Benutzerinformationen zu ermitteln;
Umwandeln der empfangenen Antwortinformationen in Stimmantwortsignale, die Merkmale entsprechend einem Ergebnis der Ermittlung (S850) haben;
Ausgeben der Stimmantwortsignale an den Benutzer (S860);
Anzeigen einer Antwortnachricht in einer anderen Anzeigeform, die dem Ergebnis der Ermittlung entspricht.

11. Steuerverfahren nach Anspruch 10, wobei der externe Server (200, 300) einen ersten Server (200) und einen zweiten Server (300) umfasst, und
das Senden des ersten Stimmsignals (S820) und das Empfangen der Antwortinformationen auf der Basis des gesendeten ersten Stimmsignals (S830) Folgendes beinhaltet:
Senden des ersten Stimmsignals zum ersten Server (200),
Empfangen von Textinformationen, die dem ersten Stimmsignal entsprechen, vom ersten Server,
Senden der empfangenen Textinformationen zum zweiten Server (300), und
Empfangen von Antwortinformationen, die den Textinformationen entsprechen, vom zweiten Server.

12. Steuerverfahren nach Anspruch 10 oder 11, wobei das Analysieren (S840) das Analysieren der Frequenz und/oder des Tons der Stimme des Benutzers und das Ermitteln des Geschlechts und/oder des Alters des Benutzers beinhaltet, und
das Umwandeln (5850) das Umwandeln der Antwortinformationen in die zweiten Stimmsignale mit einer Ausgangsfrequenz beinhaltet, die einem Ergebnis des Ermittelns entspricht.

13. Steuerverfahren nach Anspruch 12, das ferner Folgendes beinhaltet:
Speichern von ersten Informationen, die das Geschlecht und/oder das Alter des Benutzers entsprechend der Frequenz und/oder dem Ton der Stimme des Benutzers umfassen, und von zweiten Informationen, die Ausgangsfrequenzinformationen umfassen, die dem Geschlecht und/oder dem Alter des Benutzers entsprechen, wobei
das Analysieren (S840) das Vergleichen der Frequenz und/oder des Tons der Stimme des Benutzers mit den ersten Informationen und das Ermitteln des Geschlechts und/oder des Alters des Benutzers beinhaltet, und
das Umwandeln (S850) das Vergleichen des ermittelten Geschlechts und/oder Alters des Benutzers mit den zweiten Informationen und das Ermitteln der Ausgangsfrequenz beinhaltet.

14. Steuerverfahren nach einem der Ansprüche 10 bis 13, das ferner das Speichern der Frequenz und/oder des Tons der analysierten Stimme des Benutzers und entsprechender Stimmmerkmale beinhaltet, wobei
das Umwandeln (S850) das Umwandeln der empfangenen Antwortinformationen in die zweiten Stimmsignale mit den im Speicher gespeicherten Stimmmerkmalen beinhaltet, wenn die Frequenz und/oder der Ton der erfassten Stimme des Benutzers die-/derselbe ist wie die Frequenz und/oder der Ton der im Speicher gespeicherten Stimme des Benutzers.

## Revendications

1. Appareil terminal (100), comprenant :
une unité de collecte de voix (110) qui est agencée de façon à collecter la voix d'un utilisateur, et à générer un premier signal vocal ;
une unité de communication (120) qui est agencée de façon à transmettre le premier signal vocal à un serveur externe (200, 300), et qui est agencée de façon à recevoir des informations de réponse en provenance du serveur externe sur la base du premier signal vocal ayant été transmis ;
une unité de conversion de voix (130) qui est agencée de façon à convertir les informations de réponse reçues en signaux de réponse vocaux ;
une unité de fourniture de réponse (140) qui est agencée de façon à fournir les signaux de réponse vocaux à l'utilisateur ;
un afficheur (170) qui est agencé de façon à afficher un message de réponse sur la base des informations de réponse ; et
un contrôleur (150) qui est agencé de façon à analyser des propriétés de caractérisation de la voix de l'utilisateur ayant été collectée afin de déterminer des informations d'utilisateur, et à commander l'unité de conversion de voix afin de convertir les informations de réponse reçues en signaux de réponse vocaux qui ont des particularités lesquelles correspondent au résultat de la détermination ;
**caractérisé en ce que**
le contrôleur est agencé de façon à commander l'afficheur (170) afin d'afficher le message de réponse sous un format d'affichage différent qui correspond au résultat de la détermination.

2. Appareil terminal (100) selon la revendication 1, le serveur externe (200, 300) comprenant un premier serveur (200) et un deuxième serveur (300), et
l'unité de communication (120) comprenant une première unité de communication (121) qui est agencée de façon à transmettre le premier signal vocal vers le premier serveur et à recevoir des informations textuelles qui correspondent au premier signal vocal en provenance du premier serveur, et une deuxième unité de communication (122) qui est agencée de façon à transmettre les informations textuelles reçues vers le deuxième serveur et à recevoir des informations de réponse qui correspondent aux informations textuelles en provenance du deuxième serveur.

3. Appareil terminal (100) selon la revendication 1 ou 2, le contrôleur (150) étant agencé de façon à analyser au moins l'un des éléments suivants, soit la fréquence soit le ton de la voix de l'utilisateur, comme étant les propriétés de caractérisation, et à déterminer au moins l'un des éléments suivants, à savoir le genre et l'âge de l'utilisateur, comme étant les informations d'utilisateur.

4. Appareil terminal (100) selon l'une quelconque des revendications précédentes, les signaux de réponse étant des deuxièmes signaux vocaux, et l'unité de fourniture de réponse (140) étant une unité de sortie vocale qui fournit les deuxièmes signaux vocaux.

5. Appareil terminal (100) selon la revendication 4, le contrôleur (150) étant agencé de façon à convertir les informations de réponse en deuxième signaux vocaux qui ont une fréquence de sortie laquelle correspond à un résultat de la détermination.

6. Appareil terminal (100) selon la revendication 5, comprenant en outre :
un dispositif de stockage (160) qui est agencé de façon à stocker des premières informations qui comportent au moins l'un des éléments suivants, soit le genre soit l'âge de l'utilisateur, qui correspond à l'un au moins des éléments suivants, soit la fréquence soit le ton de la voix de l'utilisateur, et des deuxièmes informations qui comportent des informations de la fréquence de sortie lesquelles correspondent à l'un au moins des éléments suivants, soit le genre soit l'âge de l'utilisateur, cas dans lequel
le contrôleur (150) est agencé de façon à comparer l'un au moins des éléments suivants, soit la fréquence soit le ton de la voix de l'utilisateur, avec les premières informations, à déterminer ledit au moins un des éléments suivants, soit le genre soit l'âge de l'utilisateur, à comparer ledit au moins élément ayant été déterminé, soit le genre soit l'âge de l'utilisateur, avec les deuxièmes informations, et à déterminer la fréquence de sortie.

7. Appareil terminal (100) selon la revendication 5 ou 6, comprenant en outre :
une unité photographique (180) agencée de façon à photographier une image de l'utilisateur, cas dans lequel
le contrôleur (150) est agencé de façon à analyser l'image photographiée et à déterminer au moins l'un des éléments suivants, soit le genre soit l'âge de l'utilisateur.

8. Appareil terminal (100) selon l'une quelconque des revendications 4 à 7, comprenant en outre :
un dispositif de stockage (160) qui est agencé de façon à stocker au moins l'un des éléments suivants, soit la fréquence soit le ton de la voix analysée de l'utilisateur, et des particularités vocales correspondantes, cas dans lequel
le contrôleur (150) est agencé de façon à convertir les informations de réponse reçues en deuxièmes signaux vocaux qui possèdent les particularités vocales stockées dans le dispositif de stockage, si l'un au moins des éléments suivants, soit la fréquence soit le ton de la voix de l'utilisateur ayant été collectée, est le même que l'un au moins des éléments suivants, soit la fréquence soit le ton de la voix de l'utilisateur, stocké dans le dispositif de stockage.

9. Appareil terminal (100) selon la revendication 1, le contrôleur (150) étant agencé de façon à effectuer une commande pour que l'un au moins des postes suivants, soit une taille d'objet, soit une couleur d'objet, soit une forme d'objet, soit un format d'objet qui constitue le message de réponse, soit fourni suivant une manière qui correspond au résultat de l'opération d'analyse.

10. Procédé de commande d'un appareil terminal (100), le procédé comprenant les opérations consistant à :
collecter la voix d'un utilisateur (S810) et générer un premier signal vocal ;
transmettre le premier signal vocal (S820) à un serveur externe (200, 300) et recevoir des informations de réponse sur la base du premier signal vocal transmis (S830) ;
analyser des propriétés de caractérisation de la voix de l'utilisateur ayant été collectées afin de déterminer des informations d'utilisateur ;
convertir les informations de réponse reçues en signaux de réponse vocaux qui ont des particularités lesquelles correspondent à un résultat de la détermination (S850) ;
fournir, à l'utilisateur (S860), les signaux de réponse vocaux ;
afficher un message de réponse dans un format d'affichage différent lequel correspond au résultat de la détermination.

11. Procédé de commande selon la revendication 10, le serveur externe (200, 300) comprenant un premier serveur (200) et un deuxième serveur (300), et
la transmission du premier signal vocal (S820) et la réception des informations de réponse sur la base du premier signal vocal transmis (S830) comprenant les opérations consistant à :
transmettre le premier signal vocal au premier serveur (200),
recevoir des informations textuelles correspondant au premier signal vocal en provenance du premier serveur,
transmettre les informations textuelles reçues vers le deuxième serveur (300), et
recevoir des informations de réponse correspondant aux informations textuelles en provenance du deuxième serveur.

12. Procédé de commande selon la revendication 10 ou 11, l'analyse (S840) comprenant l'opération consistant à analyser l'un au moins des éléments suivants, soit la fréquence soit le ton de la voix de l'utilisateur, et à déterminer au moins l'un des éléments suivants, soit le genre soit l'âge de l'utilisateur, et
la conversion (S850) comprenant l'opération consistant à convertir les informations de réponse en deuxièmes signaux vocaux ayant une fréquence de sortie qui correspond à un résultat de la détermination.

13. Procédé de commande selon la revendication 12, comprenant en outre les opérations consistant à :
stocker des premières informations comprenant l'un au moins des éléments suivants, soit le genre soit l'âge de l'utilisateur, correspondant à l'un au moins des éléments suivants, soit la fréquence soit le ton de la voix de l'utilisateur, et des deuxièmes informations lesquelles comportent des informations de la fréquence de sortie correspondant audit au moins un élément, soit le genre soit l'âge de l'utilisateur, cas dans lequel
l'analyse (S840) comprend l'opération consistant à comparer au moins l'un des éléments suivants, soit la fréquence soit le ton de la voix de l'utilisateur, avec les premières informations, et à déterminer au moins l'un des éléments suivants, soit le genre soit l'âge de l'utilisateur, et
la conversion (S850) comprenant l'opération consistant à comparer ledit au moins un des éléments ayant été déterminés, soit le genre soit l'âge de l'utilisateur, avec les deuxièmes informations, et à déterminer la fréquence de sortie.

14. Procédé de commande selon l'une quelconque des revendications 10 à 13, comprenant en outre le stockage de l'un au moins des éléments suivants, soit la fréquence soit le ton de la voix de l'utilisateur ayant été analysée, et des particularités vocales correspondantes, cas dans lequel
la conversion (S850) comprend l'opération consistant à convertir les informations de réponse reçues en deuxièmes signaux vocaux possédant les particularités vocales stockées dans le dispositif de stockage, si l'un au moins des éléments suivants, soit la fréquence soit le ton de la voix de l'utilisateur ayant été collectée, est le même que l'un au moins des éléments suivants, soit la fréquence soit le ton de la voix de l'utilisateur stockée dans le dispositif de stockage.
